# EUROPEAN PATENT APPLICATION

(11) **EP 3 771 732 A1**
(43) Date of publication of application: **03.02.2021**
(21) Application number: 20187860.0
(22) Date of filing: 27.07.2020
(51) Int. Cl.: C09D 4/00, C09D 175/04, C09D 183/04, C09D 5/16

(54) **HYDROPHOBIC-ICEPHOBIC ORGANOSILANE COMPOSITIONS, COATINGS, AND METHODS**

(30) Priority: 01.08.2019 US 201916529101
(71) Applicant: The Boeing Company, Chicago, IL 60606 (US)
(72) Inventor: IJERI, Vijaykumar, Chicago, Illinois 60606-1596 (US); GAYDOS, Stephen P., Chicago, Illinois 60606-1596 (US); SEEBERGH, Jill E., Chicago, Illinois 60606-1596 (US); DHIRDE, Priyanka G., Chicago, Illinois 60606-1596 (US); KHANNA, Anand Sawroop, Chicago, Illinois 60606-1596 (US)
(74) Representative: Harris, Jennifer Lucy

(57) **Abstract**

A hydrophobic-icephobic composition includes a monomer binder, an organic solvent, and a hydrolyzed organosilane. The hydrolyzed organosilane is represented by a formula of R¹-Si-(OH)₃. The R¹ group comprises an alkyl or a haloalkyl having from 3 to 40 carbons. A hydrophobic-icephobic coating over a substrate includes a polymer base and a polyorganosiloxane. The polyorganosiloxane includes -(R¹-Si-O₂)- units. The R¹ group includes an alkyl or a haloalkyl having from 3 to 40 carbons. One or more of the -(R¹-Si-O₂)- units of the polyorganosiloxane are may be chemically bonded to the substrate.

## Description

### Field

Aspects generally relate to hydrophobic and icephobic compositions, coatings, and methods.

### BACKGROUND

The everyday buildup of ice upon the surfaces of structures, such as power lines, buildings, and signs, which might compromise those structures. The ice accumulated upon industrial, agricultural, and other mechanical equipment makes operation of the equipment difficult or impossible. Ice accumulation upon vehicles, such as air, land, and marine vehicles, poses a challenging problem. For example, ships traveling in cold climates may have ice formed thereon, thereby disadvantageously increasing the weight and decreasing the maneuverability of the ships.

The buildup of ice upon the wings and components of aircrafts might similarly increase the weight of the aircraft and degrade aircraft performance. The lift generated by the wings, and thus the ability of the aircraft to become and remain airborne, is dependent on the shape of the wings. Even a small accumulation of ice upon the surface of the wings can significantly increase drag and dramatically reduce lift. Furthermore, ice buildup along control surfaces of the aircraft can impede the movement of those surfaces and prevent proper control of the aircraft.

One method of de-icing aircraft surfaces involves electro-mechanical methods, such as wipers, and/or thermal energy, such as embedded heating elements, to break or melt the ice. However, these mechanical and heating anti-icing devices to breakup and shed the accumulated ice consume high levels of electrical energy. Another method of de-icing aircraft surfaces involves de-icing fluids to remove or prevent ice adhesion on aircraft surfaces. However, de-icing fluids are effective for a short duration and may not be environmentally preferred. Still another method of de-icing aircraft surfaces involves low surface energy waxes. However, low surface energy waxes are difficult to apply over large surfaces and may not be environmentally preferred.

One approach of de-icing aircraft surfaces is the proposed use of TMOS (Si(OCH₃)₄) or TEOS (Si(OCH₂CH₃)₄) in a sol-gel process to respectively form a hydrophobic polymethylsiloxane or polyethylsiloxane over the aircraft surface. However, such approach requires a high curing temperature of over 120°C to form a polysiloxane, has low adhesion strength, and/or has low durability for use over an aircraft surface.

Therefore, there is a need for a durable surface coating with long lasting properties which can be applied to a variety of substrates without complex coating equipment.

### SUMMARY

In at least one aspect, a hydrophobic-icephobic composition includes a monomer binder, an organic solvent, a hydrolyzed organosilane. The hydrolyzed organosilane is represented by a formula of R¹-Si-(OH)₃. The R¹ group comprises an alkyl or a haloalkyl having from 3 to 40 carbons.

In at least one aspect, a hydrophobic-icephobic coating over a substrate includes a polymer base and a polyorganosiloxane. The polyorganosiloxane includes -(R¹-Si-O₂)- units. The R¹ group includes an alkyl or a haloalkyl having from 3 to 40 carbons. One or more of -(R¹-Si-O)₂- units of the polyorganosiloxane are chemically bonded to the substrate.

In at least one aspect, a method of forming the hydrophobic-icephobic coating includes hydrolyzing an organosilane in an organic solvent to form a hydrolyzed organosilane mixture. The organosilane is represented by a formula (R¹)-Si-(OR²)₃ in which R¹ comprises an alkyl or a haloalkyl having 3 to 40 carbons and in which each R² independently comprises an alkyl having 1 to 3 carbons. A polymer base, a hardener, and the hydrolyzed organosilane mixture are mixed together to form a hydrophobic-icephobic composition. The hydrophobic-icephobic composition is applied to the substrate. The hydrophobic-icephobic composition is cured to form the hydrophobic-icephobic coating.

### BRIEF DESCRIPTION OF THE DRAWINGS

So that the manner in which the above recited features of the present disclosure can be understood in detail, a more particular description of the disclosure, briefly summarized above, may be had by reference to aspects, some of which are illustrated in the appended drawings. It is to be noted, however, that the appended drawings illustrate only exemplary aspects and are therefore not to be considered limiting of its scope, may admit to other equally effective aspects.
FIG. 1 is a schematic diagram of absorption of hydrolyzed organosilane from a hydrophobic-icephobic composition applied over a metal substrate.
FIG. 2 is a schematic diagram of a hydrophobic-icephobic coating formed from curing the layer of the hydrophobic-icephobic composition over the metal substrate of FIG. 1.
FIG. 3 is a schematic diagram of a hydrophobic-icephobic coating formed from curing the layer of the hydrophobic-icephobic composition over the metal substrate of FIG. 1 in which the hydrophobic-icephobic composition further includes silica nanoparticles.

To facilitate understanding, identical reference numerals have been used, where possible, to designate identical elements that are common to the figures. It is contemplated that elements and features of one aspect may be beneficially incorporated in other aspects without further recitation.

### DETAILED DESCRIPTION

Some aspects will now be described in greater detail below, including specific aspects, versions and examples, but the present disclosure is not limited to these aspects, versions or examples, which are included to enable a person having ordinary skill in the art to make and use aspects, when the information in the present disclosure is combined with available information and technology.

Various terms as used herein are defined below. To the extent a term used in a claim is not defined below, it should be given the broadest definition persons in the pertinent art have given that term as reflected in one or more printed publications or issued patents.

All documents described herein are incorporated by reference herein, including any priority documents and/or testing procedures to the extent they are not inconsistent with this text. As is apparent from the foregoing general description and the specific aspects, while forms of the aspects have been illustrated and described, various modifications can be made without departing from the spirit and scope of the present disclosure. Accordingly, it is not intended that the present disclosure be limited thereby. Likewise, the term "comprising" is considered synonymous with the term "including." Likewise whenever a composition, an element or a group of elements is preceded with the transitional phrase "comprising," it is understood that we also contemplate the same composition or group of elements with transitional phrases "consisting essentially of," or "consisting of." The terms "comprising," "consisting essentially of," "consisting of" also include the product of the combinations of elements listed after the term.

Compositions, coatings, and methods of forming a coating which are both hydrophobic and icephobic (referred to herein as "hydrophobic-icephobic") are provided. Hydrophobic coatings over a surface reduce water accumulation and hence reduce the growth of ice due to the freezing of the accumulated water. Icephobic coatings over a surface reduce or prevent ice accumulation by providing low ice adhesion strength of ice to the surface. The icephobic coatings passively reduce or prevent ice accumulation without any active power source by shear forces causing the ice to shed from the surface due to the low ice adhesion strength. In contrast, electro-mechanical and/or thermal energy de-icing devices actively reduce or prevent ice accumulation by using an active power source.

The hydrophobic-icephobic coatings include polyorganosiloxanes having -(R¹-Si-O₂)- repeating units with a long chain alkyl or haloalkyl group R¹, in which R¹ has 3 or more carbons, such as 10 or more carbons. The polyorganosiloxanes are generally represented by formula (I) including its derivatives, isomers, and analogs thereof: 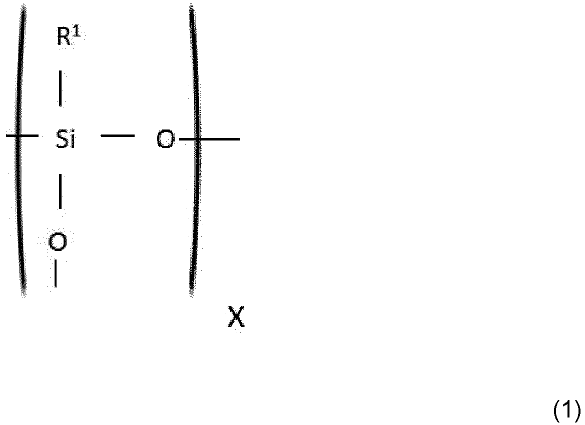 The long chain alkyl or haloalkyl group R¹ having 3 or more carbons, such as 10 or more carbons, provides a hydrophobic-icephobic functional R¹ group tail. The R¹ group of the repeating units of the polyorganosiloxanes can include alkyls that are linear or branched, halogenated or non-halogenated, and/or cyclic or non-cyclic. For example, the R¹ group can be saturated linear non-cyclic alkyls or haloalkyls. A saturated unbranched linear non-cyclic alkyl or haloalkyl provides a longer hydrophobic-icephobic functional group tail in comparison to unsaturated, branched, and/or cyclic alkyls or haloalkyls. For example, an unsaturated alkyl or haloalkyl may undesirably cross-link shorting the functional group tail and reducing the hydrophobicity and/or icephobicity of the functional group tail.

The hydrophobic-icephobic coatings can be formed as the topcoats of metal substrates. The polyorganosiloxanes form in situ over a surface of a metal substrate and can chemically bond to the surface of the metal substrate. The metal substrate can be a bare aluminum substrate, an anodized aluminum substrate, a titanium substrate, a stainless steel substrate, a high strength steel substrate, or other suitable metal substrates. The aluminum substrates can be pure aluminum substrates or aluminum alloy substrates. The alloying elements of the aluminum alloy can be chromium, magnesium, titanium, molybdenum, vanadium, tungsten, iron, nickel, cobalt, manganese, copper, niobium, zinc, lithium, silicon, other alloying elements, and combinations thereof. The metal substrate can include a conversion coating thereover, such as a chromium conversion coating.

The metal substrates can include an intermediate coating formed thereover, such as glossy coatings, sealant coatings, decorative paint coatings, and/or decals formed thereover. The hydrophobic-icephobic topcoats can be chemically bonded to the surface of the intermediate coating of the metal substrate. Examples of glossy coatings include, without limitation, polyurethane, epoxy, polycarbonate, acrylic, and polyester coatings. Examples of sealants include, without limitation, polysulfides, polythioethers, polysilicones, polysiloxanes, epoxides, and polyurethanes. Sealants can provide leakage resistance, corrosion resistance, thermal and acoustic insulation, electrical and electro-magnetic insulation, fire-barrier protection, and/or aesthetic appeal. The intermediate coatings can be formed directly on the metal substrates or can be formed over one or more primer layers between the intermediate coating and the metal substrate. An aluminum (bare or anodized) substrate with a glossy coating formed thereover is one example of a metal substrate used to manufacture aircraft vehicles.

The hydrophobic-icephobic coatings can be formed over a metal substrate by applying a hydrophobic-icephobic composition. The hydrophobic-icephobic composition comprises a long chain alkyl or haloalkyl hydrolyzed organosilane and a monomer binder. The hydrolyzed organosilane is represented by the formula (R¹)-Si-(OH)₃, wherein R¹ comprises an alkyl or a haloalkyl having 3 or more carbons, such as 10 or more carbons. For example, R¹ can comprise 3 to 40 carbons, such as 10 to 20 carbons.

The hydrolyzed organosilane can be produced by mixing an organosilane with an alcohol solvent, such as n-butyl alcohol, butyl alcohol, methanol, ethanol, propanol, or other suitable solvents. The organosilane is represented by the formula (R¹)-Si-(OR²)₃, in which R¹ comprises an alkyl or a haloalkyl having 3 or more carbons and in which R² comprises an alkyl having 1 to 3 carbons. The R¹ group includes alkyls that are linear or branched, halogenated or non-halogenated, and/or cyclic or non-cyclic. For example, the R¹ group of the organosilane can be saturated linear non-cyclic alkyls or haloalkyls. The long chain alkyl or haloalkyl R¹ group of the organosilane has 3 or more carbons, such as 10 or more carbons. For example, the R¹ group can comprise from 3 to 40 carbons, such as from 10 to 20 carbons.

Examples of organosilanes include hexadecyltrimethoxysilane HDTMS (C₁₆H₃₃-Si-(OCH₃)₃), hexadecyltriethoxysilane (C₁₆H₃₃-Si-(OC₂H₅)₃), dodecyl-trimethoxysilane (C₁₂H₂₅-Si-(OCH₃)₃), dodecyltriethoxysilane (C₁₂H₂₅-Si-(OC₂H₅)₃), octadecyltrimethoxysilane (C₁₈H₃₇-Si-(OCH₃)₃), octadecyltriethoxysilane (C₁₈H₃₇-Si-(OC₂H₅)₃), other non-halogenated organosilanes, and halogenated organosilanes.

The formation of hydrolyzed organosilane is set forth in chemical reaction scheme (I):

(R¹)-Si-(OR²)₃ +3H₂0 → R¹-Si-(OH)₃ + 3R²OH (I)

The organosilane includes a long chain alkyl or haloalkyl group R¹ and three alkoxide groups. The three alkoxide groups of the organosilane are hydrolyzable to three hydroxy groups while liberating short length alcohol R²OH, such as methanol, ethanol, or propanol. The hydroxy groups of the hydrolyzed organosilane are more reactive than the hydroxy group of the liberated alcohol R²OH. The hydroxy group of the hydrolyzed organosilane more strongly couples via van der Waals forces to a surface of a substrate than the hydroxy group of the liberated alcohol R²OH.

The hydrolyzed organosilane is produced by mixing an organosilane represented by the formula (R¹)-Si-(OR²)₃ in an organic solvent and an alcohol solvent. The alcohol solvent is hygroscopic and is miscible with organic solvents, such as xylene. Although water is by itself not miscible in xylene, the alcohol provides absorbed water for hydrolysis of the organosilane. The organosilane contains OR² hydrolyzable groups which can be hydrolyzed and liberated to an alcohol R²OH, such as methanol, ethanol, or propanol. After hydrolysis, each hydrolyzed organosilane compound contains three silanol (Si-OH) groups.

After, during, or before hydrolysis of the organosilane, the organosilane is mixed with a monomer binder. The monomer binder when polymerized by a hardener forms a polymer binder. The polymer binder can be polyurethanes, epoxies, acrylics, polyimides, polysiloxanes, other suitable polymers, and combinations thereof. The polymer binder can be clear or can include pigments. The hardener can be a catalyst or any suitable polymerization agent. The hydrophobic-icephobic composition can comprise hydrolyzed organosilane to monomer binder in a weight ratio of from about 1:1 to about 1:10. The hydrophobic-icephobic composition can comprise the hydrolyzed organosilane to organic solvent in a weight ratio from about 1:2 to about 1:100.

The hydrophobic-icephobic composition of a hydrolyzed organosilane, a monomer binder, and a hardener is applied to a surface of a metal substrate to form a hydrophobic-icephobic coating. The hydrophobic-icephobic coating is applied to a surface of a metal substrate by brushing, rolling, dipping, drenching, wiping, spraying, or other suitable application technique. The hydrophobic-icephobic composition can be sprayed onto a surface of a metal substrate since the composition contains a mixture of organic solvents.

The applied hydrophobic-icephobic composition can be cured from an ambient temperature of about 25°C to a high temperature of about 80°C, such as from about 40°C to about 60°C. The applied hydrophobic-icephobic composition can be cured for a time period from about 12 hours to about 96 hours, such as from about 24 hours to about 60 hours. The hydrophobic-icephobic coating can be cured by heating from heat lamps, heating elements, heated air, and other heating devices. Heating can accelerate condensation and crosslinking of the hydrolyzed organosilane over a metal substrate.

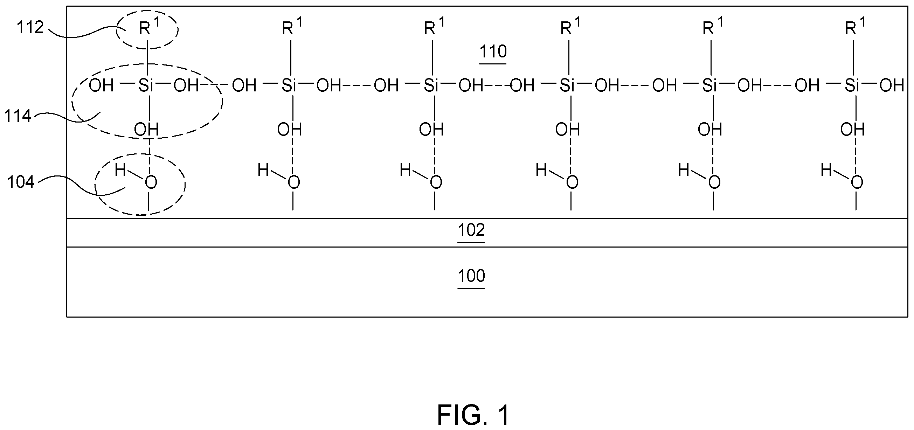

FIG. 1 is a schematic diagram of absorption of hydrolyzed organosilane from a hydrophobic-icephobic composition applied over a metal substrate 100. The metal substrate 100 may be any metal substrate, such as an aluminum substrate, coated with any intermediate coating 102, such as an organic intermediate coating. The intermediate coating 102 has terminal hydroxy groups 104. A layer 110 of the hydrophobic-icephobic composition is applied over the intermediate coating 102 of the metal substrate 100. The hydrolyzed organosilane includes a long chain alkyl or haloalkyl tail group R¹ 112 and a silanol head 114 with terminal hydroxy groups.

The terminal hydroxy groups of the silanol heads 114 adsorb onto the intermediate coating 102 of the metal substrate 100 due to coupling by van der Waals forces between the terminal hydroxy groups of the silanol heads 114 and the terminal hydroxy groups 104 of the intermediate coating 102. The hydrolyzed organosilane assembles over the intermediate coating 102 of the metal substrate 100 with the long chain alkyl or haloalkyl tail groups R¹ 112 away from the intermediate coating 102 towards a top surface of the layer 110 and with the silanol head 114 towards the intermediate coating 102.

The liberated alcohol R²OH after hydrolysis of the organosilane and the alcohol solvent are also in competitive absorption with the intermediate coating 102 of the metal substrate 100 competitive to the hydrolyzed organosilane. The hydrolyzed organosilane preferentially absorbs on the intermediate coating 102 of the metal substrate 100 in comparison to the liberated alcohol or alcohol solvent. Due to the greater polarity of the silanol heads 114 of the organosilane than the liberated alcohol or alcohol solvent, the silanol heads 114 preferentially absorbs onto the surface of the intermediate coating 102 in comparison to the liberated alcohol or alcohol solvent. The long chain alkyl or haloalkyl tail group R¹ 112 assembled towards the top surface of the layer 110 provides hydrophobic-icephobic properties to the layer.

Hydrolysis converts Si-O-R² groups contained in the organosilane, such as HDTMS, to silanols (Si-OH groups). The polarity of the organosilane increases after hydrolysis and amplifies intermolecular formation of order structures. The polar silanols assemble together over a surface of a metal substrate while the hydrophobic-icephobic alkyl tails assemble together. The polar silanols help the compatibility of the organosilane with the polymer base, such as polyurethane. The organosilanes are packed over the surface of the metal substrate so that the hydrophobic-icephobic tails block the polar silanols from interactions with water and ice.

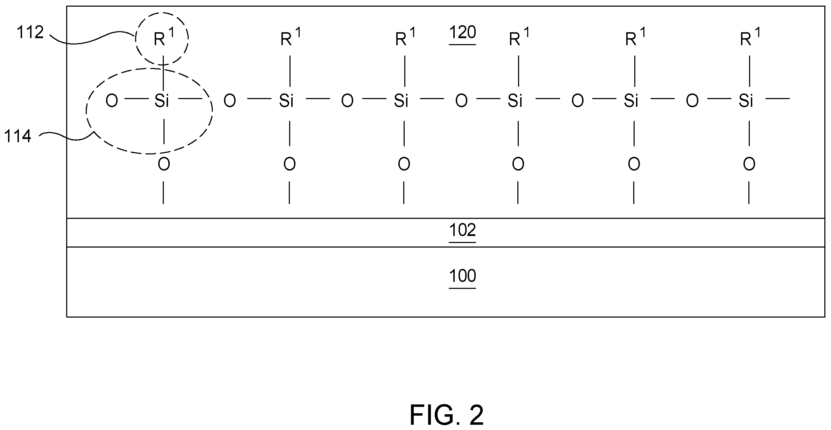

FIG. 2 is a schematic diagram of a hydrophobic-icephobic coating 120 formed from curing the layer 110 of the hydrophobic-icephobic composition over the metal substrate 100 of FIG. 1. Curing of the absorbed hydrolyzed organosilane causes a condensation reaction of the between hydroxy groups of the silanol heads 114 and the hydroxy groups 104 (FIG. 1) of the intermediate coating 102 of the metal substrate 100. Therefore, the hydrolyzed organosilane becomes chemical bonded to the intermediate coating 102 of the metal substrate 100. In addition, curing of the absorbed hydrolyzed organosilane causes a condensation reaction between hydroxy groups of neighboring silanol heads 114 of hydrolyzed organosilane to chemically bond together to form a polyorganosiloxane. Due to the low amount of liberated alcohol or alcohol solvent coupling to the intermediate coating 102 of the metal substrate 100, the polyorganosiloxane is more uniformly formed over the intermediate coating 102 of the metal substrate 100 with less interruption from alcohol coupled to the intermediate coating 102.

Heat curing of the applied hydrophobic-icephobic composition can increase the rate of the condensation reactions of the silanol heads 114 to the intermediate coating 102 and of the silanol heads 114 to each other. Curing of the applied hydrophobic-icephobic composition can cause evaporation of the organic solvent, alcohol solvent, and liberated alcohol from the hydrophobic-icephobic composition. Heat curing of the applied hydrophobic-icephobic composition can cause the rate of polymerization of the monomer binder by the hardener to increase.

With the silanols 114 of the polyorganosiloxanes bonded to the surface of the intermediate coating 102, the alkyl tail 112 is a long chain alkyl group providing hydrophobic-icephobic properties to the coating 120. In comparison, hydrolyzed TMOS and hydrolyzed TEOS can also form a polysiloxane coating bonded to a substrate, but only provide a short chain alkyl tail which is less hydrophobic. In addition, a long chain alkyl tail provides more ordered and more densely packed organosilanes assembled over the surface of the metal substrate in comparison to a short chain alkyl tail.

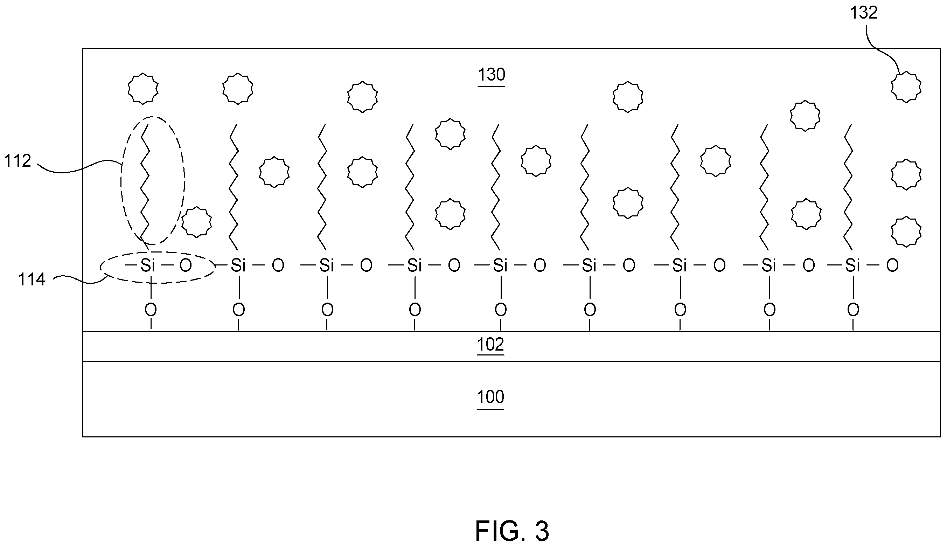

FIG. 3 is a schematic diagram of a hydrophobic-icephobic coating 130 formed from curing the layer 110 of the hydrophobic-icephobic composition over the metal substrate 100 of FIG. 1 in which the hydrophobic-icephobic composition further includes silica nanoparticles 132.

Silica nanoparticles 132 are added to the hydrophobic-icephobic composition to enhance the hydrophobicity and icephobicity of the hydrophobic-icephobic coating 130. The silica nanoparticles can be fumed or unfumed, precipitated or unprecipitated, colloidal or non-colloidal, porous or non-porous, coated or uncoated, and/or structured and non-structured. For example, the silica nanoparticles can be a hydrophobic coated fumed silica nanoparticles. A hydrophobic coated silica nanoparticle can be pre-coated with a hydrophobic coating or can form a hydrophobic coating in situ from the hydrolyzed organosilane of the hydrophobic-icephobic composition. The silica nanoparticles can be present in the hydrophobic-icephobic composition from about 0.5 weight % to about 5 weight %.

In certain aspects, the hydroxy group of hydrolyzed organosilanes can also be condensed onto hydroxy groups of the nanoparticles, such as silica nanoparticles, to provide hydrophobic-icephobic properties to the nanoparticles.

Without being bound by theory, the hydrophobic-icephobic coating 130 provides added hydrophobic and icephobic properties due to the silica nanoparticles 132. Although the silica nanoparticles embedded in the polymer binder of the hydrophobic-icephobic coating 130 may be worn away or abraded away, the hydrophobic-icephobic coating 130 still retains hydrophobic-icephobic properties due to the long chain alkyl or haloalkyl tail groups R¹ 112 of the polyorganosiloxane chemically bonded to the intermediate coating 102 of the metal substrate 100.

The hydrophobic-icephobic coatings 120, 130 of FIGS. 2-3 can be formed to have one or more properties that are useful as a topcoat of a metal substrate 100 for use in an aircraft or in other applications.

The hydrophobic-icephobic coating can have a water contact angle of about 90° or greater. With the addition of silica nanoparticles to the hydrophobic-icephobic composition, the hydrophobic-icephobic coating can have a water contact angle of about 100° or greater. The water contact angle is the angle measured through the liquid where a liquid-vapor interface meets a solid surface. The water contact angle measures the wettability of a solid surface by a liquid via the Young equation. The hydrophobic-icephobic coatings have a high water contact angle and a low wetting over an intermediate coating 102 of a metal substrate or over a metal substrate 100. When a surface has a water contact angle of 90° or greater, water more easily rolls off the surface resulting in less water that can freeze into ice. The water contact angle was determined by ASTM D 7334.

The hydrophobic-icephobic coatings can have a water sliding angle of about 30° or less. With the addition of silica nanoparticles to the hydrophobic-icephobic composition, the hydrophobic-icephobic coating can have a water sliding angle of about 15° or less. The sliding angle is defined as angle between the surface and the horizontal plane at which a water drop starts to slide off the surface under the influence of gravity. The sliding angle can indicate the self-cleaning ability of a coating. Lower the sliding angle, the greater the self-cleaning ability of the coating to remove water resulting in less water that can freeze into ice. The water sliding angle was determined by ASTM D 7334.

The hydrophobic-icephobic coating can have an ice adhesion strength (*τ*_{ice)} of about 100kPA or less, such as about 80kPA or less. With the addition of silica nanoparticles to the hydrophobic-icephobic composition, the hydrophobic-icephobic coating can have an ice adhesion strength of about 30kPa or less. Ice adhesion strength is measured as follows. A coated sample is placed on a cooling plate. The temperature of the plate is maintained at -20°C. To bond ice with the substrate, a small amount of water is dropped on the coated substrate and then ice cubes are placed over them, allowing them to fuse together. This system is kept steady for 1 hour. Using a force transducer, the force required to detach the ice cube from the surface of the coated substrate is measured using a digital force gauge.

The ice adhesion strength determines the ability of the hydrophobic-icephobic coating to provide self de-icing of accumulated ice over a metal substrate by shearing action. The shearing action can be the airflow across the metal substrate, acceleration/deceleration of the metal substrate, mechanical force applied to the accumulated ice, such as by wipers or by fluids, other shearing action, or combinations thereof. The lower the ice adhesion strength the greater the self de-icing of accumulated ice over the metal substrate since the accumulated ice more easily falls off from the metal substrate. Due to the unique nature of water and ice, a hydrophobic coating can be either icephobic or icephilic. An ice adhesion strength property is one parameter than can determine whether a hydrophobic coating is also icephobic.

The hydrophobic-icephobic coatings with the additional silica nanoparticles over intermediate coated (such as an intermediate epoxy coating) aluminum substrate can also have one or more of the following properties which shows coating has good durability. The hydrophobic-icephobic coating can have an coating adhesion strength with a rating of 5B as determined by ASTM D 3359 over an epoxy coated aluminum substrate. A high coating adhesion grade shows that the hydrophobic-icephobic coating has high adhesion to epoxy coated aluminum substrates. The hydrophobic-icephobic coating can have a Taber abrasion value of about 25 mg or less of weight loss as measured by ASTM D 4060 with a load of 1 Kg, 1000 cycles, CS10 abrasive wheels. A Taber abrasion value of a low amount of material loss (mg) shows that the hydrophobic-icephobic coating is resistant to abrasion and that the hydrophobic-icephobic coating is durable. The hydrophobic-icephobic coating can pass 500 hrs of a UV light exposure test under ASTM G 154 with a change in gloss and color of the hydrophobic-icephobic coating of about 2% or less. Passing the UV light exposure test shows that the hydrophobic-icephobic coating has little or no degradation from exposure to sunlight.

The hydrophobic-icephobic coating can have a long lifetime once applied over a metal substrate. For example, the hydrophobic-icephobic coating can have good durability over a metal substrate, such as over a metal substrate of an aircraft. Not wishing to be bound by theory, it is believed that the chemically bonded polyorganosiloxane to the metal substrate or intermediate coating of the metal substrate provides long lasting hydrophobic-icephobic properties. In comparison, other hydrophobic-icephobic coatings without chemically bonded polyorganosiloxane over a surface of a metal substrate can be easily abraded or removed from the metal surface.

The hydrophobic-icephobic coating is lightweight in comparison to electro-mechanical devices and thermal energy devices. A lightweight hydrophobic-icephobic coating can be used without significantly increasing the weight of an aircraft, and thus, decreases the fuel consumption of an aircraft by removing or reducing ice accumulation from the aircraft that adds weight and increases drag on the aircraft.

The hydrophobic-icephobic coating can be formed from an hydrophobic-icephobic composition manufactured at low cost. The organosilane, organic solvent, alcohol solvent, and optional silica nanoparticles of the hydrophobic-icephobic composition are commercially available. For example, hexadecyltrimethoxysilane, dodecyl-trimethoxysilane, dodecyltriethoxy-silane, and octadecyltrimethoxysilane, octadecyltriethoxysilane available from Sigma-Aldrich Corp of St. Louis, MO. For example, organic solvents and alcohol solvents are available from Sigma-Aldrich Corp of St. Louis, MO. For example, silica nanoparticles are available from Evonik Industries of Greensboro, NC.

The hydrophobic-icephobic coating can be formed from a hydrophobic-icephobic composition of environmentally benign materials. For example, the organosilane is not known as a carcinogen. For example, the optional silica nanoparticles have been recognized as safe by the FDA for use in cosmetics and food additives.

The hydrophobic-icephobic coating may be utilized alone or in combination with other de-icing devices, such as electro-mechanical devices, thermal energy devices, de-icing fluids, and/or lower surfaces energy waxes. The hydrophobic-icephobic coating minimizes the shear force required for the ice to fall off the hydrophobic-icephobic coating.

The hydrophobic-icephobic coatings can be easily applied over large surface areas such as to the horizontal wings, the horizontal tails, the vertical tails, and/or the fuselage of an aircraft. After the lifetime expiration of the hydrophobic-icephobic coating, after damage to the hydrophobic-icephobic coating, or after a partial application of the hydrophobic-icephobic coating to a substrate, a second hydrophobic-icephobic coating can be applied or reapplied over the initial hydrophobic-icephobic coating.

The hydrophobic-icephobic coatings can be resistant to chemical exposure, such as resistant to cleaning solutions. The hydrophobic-icephobic coatings can be applied over outer surfaces of aircrafts in which cleaning of the outer surfaces of the aircrafts has little or no impact to the hydrophobic-icephobic coatings. In other words, the hydrophobic-icephobic coating is not washed off from a metal substrate.

The hydrophobic-icephobic coatings can be used on other vehicles or structures besides aircrafts. For example, the hydrophobic-icephobic coatings can be used over electrical power lines use to prevent ice accumulation and the collapse thereof. The hydrophobic-icephobic coatings can be over the metal blades of wind powered turbines to reduce ice accumulation that could cause the wind turbines to not operate. The hydrophobic-icephobic coatings can be applied to the metal rails of railroad tracks to reduce ice accumulation that could cause train derailment.

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

### ASPECTS

The present disclosure provides, among others, the following aspects, each of which may be considered as optionally including any alternate aspects.

Clause 1. A composition, comprising a monomer binder, an organic solvent, and a hydrolyzed organosilane. The hydrolyzed organosilane is represented by a formula of R¹-Si-(OH)₃, wherein R¹ is selected from the group consisting of an alkyl or a haloalkyl having from 3 to 40 carbons.

Clause 2. The composition of any of the clauses 1 or 3-6, wherein R¹ is selected from the group consisting of an alkyl or a haloalkyl having from 10 to 20 carbons.

Clause 3. The composition of any of the clauses 1-2 or 4-6, further comprising silica nanoparticles.

Clause 4. The composition of any of the clauses 1-3 or 5-6, wherein the hydrolyzed organosilane and the monomer binder are present in a weight ratio from about 1:1 to about 1:10.

Clause 5. The composition of any of the clauses 1-4 or 6, wherein the hydrolyzed organosilane and the organic solvent are present in a weight ratio from about 1:2 to about 1:100.

Clause 6. The composition of any of the clauses 1-5, wherein the silica nanoparticles are present in amount from about 0.5 weight percent to about 5 weight percent.

Clause 7. A substrate comprising a coating disposed thereon. The coating comprising a polymer base and a polyorganosiloxane. The polyorganosiloxane comprising -(R¹-Si-O₂)-units, wherein R¹ is selected from the group consisting of an alkyl or a haloalkyl having from 3 to 40 carbons and wherein one or more of -(R¹-Si-O₂)- units are chemically bonded to the substrate.

Clause 8. The substrate of any of the clauses 7 or 9-16, wherein the R¹ is selected from the group consisting of an alkyl or a haloalkyl having from 10 to 20 carbons.

Clause 9. The substrate of any of the clauses 7-8 or 10-16, having a water contact angle about 90°or more.

Clause 10. The substrate of any of the clauses 7-9 or 11-16, having a water sliding angle of about 30°or less.

Clause 11. The substrate of any of the clauses 7-10 or 12-16, having an ice adhesion strength of about 80 kPa or less.

Clause 12. The substrate of any of the clauses 7-11 or 13-16, wherein the substrate comprises an intermediate coating disposed on a metal substrate. The one or more of -(R¹-Si-O₂)- units are chemically bonded to the intermediate coating disposed on a metal substrate.

Clause 13. The substrate of any of the clauses 7-12 or 14-16, further comprising silica nanoparticles.

Clause 14. The substrate of any of the clauses 7-13 or 15-16, having a water contact angle about 100°or more.

Clause 15. The substrate of any of the clauses 7-14 or 16, having a water sliding angle of about 20°or less.

Clause 16. The substrate of any of the clauses 7-15, having an ice adhesion strength of about 30 kPa or less.

Clause 17. A method of forming a hydrophobic-icephobic coating over a substrate, comprising hydrolyzing an organosilane in an organic solvent to form a hydrolyzed organosilane mixture. The organosilane is represented by a formula (R¹)-Si-(OR²)₃ wherein R¹ is selected from the group consisting of an alkyl or a haloalkyl having 3 to 40 carbons and wherein each R² is independently selected from the group consisting of an alkyl having 1 to 3 carbons. A polymer base, a hardener, and the hydrolyzed organosilane mixture are mixed to form a hydrophobic-icephobic composition. The hydrophobic-icephobic composition is applied to the substrate. The hydrophobic-icephobic composition is cured to form the hydrophobic-icephobic coating.

Clause 18. The method of any of the clauses 17 or 19-20, wherein R¹ is selected from the group consisting of an alkyl or a haloalkyl having from 10 to 20 carbons.

Clause 19. The method of any of the clauses 17-18 or 20, further comprising mixing an alcohol solvent with the organic solvent and the organosilane to hydrolyze the organosilane.

Clause 20. The method of any of the clauses 17-19, wherein the hydrophobic-icephobic composition is thermally cured at a temperature from an ambient temperature to about 80°C.

### EXAMPLES

### Example 1

A hydrophobic-icephobic composition was prepared by mixing 50 ml of xylene and 25 ml of n-butyl alcohol to provide an organic solvent and alcohol solvent mixture. The mixture was stirred from 15 min to 20 min using a magnetic stirrer at 1000 rpm in ambient conditions. 10 ml of HDTMS was added dropwise to the organic/alcohol solvent. The HDTMS solvent mixture was stirred for 24 hours at 1000 rpm in ambient conditions resulting in a hydrolyzed HDTMS solvent mixture. A two-part polyurethane base from Dooall Corpro India Pvt Ltd of Mumbai, India was mixed with hydrolyzed HDTMS solvent in a 1:1 volume ratio of polyurethane base to hydrolyzed HDTMS solvent. The mixture was stirred for 24 hrs at 600 rpm using magnetic stirrer at ambient conditions to obtain a homogeneous mixture.

A hardener from Dooall Corpro India Pvt Ltd was added to the homogeneous mixture in a 4:1 volume ratio of polyurethane base to hardener and was allowed to stand for 20 minutes. An additional 5 ml of xylene was added to the hydrolyzed HDTMS, polyurethane base, hardener mixture. The resulting mixture was applied over an epoxy primer intermediate coating formed over an aluminum alloy substrate resulting in a hydrophobic-icephobic topcoat. The thickness of the epoxy primer interface coating was about 100 µm. The thickness of the hydrophobic-icephobic topcoat was from about 30 µm to about 35 µm as measured by ASTM D 7091. The water contact angle of the hydrophobic-icephobic coating was about 93°. The water sliding angle of the hydrophobic-icephobic coating was about 25°. The ice adhesion strength of the hydrophobic-icephobic coating was about 75 kPa.

### Example 2

A hydrophobic-icephobic composition was prepared by mixing 50 ml of xylene and 25 ml of n-butyl alcohol to provide an organic solvent and alcohol solvent mixture. The mixture was stirred from 15 min to 20 min using a magnetic stirrer at 1000 rpm in ambient conditions. 10 ml of HDTMS was added dropwise to the organic/alcohol solvent. The HDTMS solvent mixture was stirred for 24 hours at 1000 rpm in ambient conditions resulting in a hydrolyzed HDTMS solvent mixture. A two-part polyurethane base from Dooall Corpro India Pvt Ltd of Mumbai, India was mixed with hydrolyzed HDTMS solvent in a 1:1 volume ratio of polyurethane base to hydrolyzed HDTMS solvent. The mixture was stirred for 24 hrs at 600 rpm using magnetic stirrer at ambient conditions to obtain a homogeneous mixture. Silica nanoparticles of Aerosil grade R 8200 from Evonik Industries of Mumbai, India were added to the homogeneous mixture in amount of 0.5 wt. % of the homogenous mixture and mixed for 30 minutes using magnetic stirrer at 250 rpm followed by probe sonication for 1 hour in ambient conditions to achieve homogeneous dispersion of the silica nanoparticles within the homogeneous mixture.

A hardener from Dooall Corpro India Pvt Ltd was added to the hydrolyzed organosilane silica mixture in a 4:1 volume ratio of polyurethane base to hardener and was allowed to stand for 20 minutes. An additional 5 ml of xylene was added to the hydrolyzed organosilane silica mixture. The resulting mixture was applied over an epoxy primer intermediate coating formed over an aluminum alloy substrate resulting in a hydrophobic-icephobic topcoat. The thickness of the epoxy primer interface coating was about 100 µm. The thickness of the hydrophobic-icephobic topcoat was from about 30 µm to about 35 µm as measured by ASTM D 7091. The water contact angle of the hydrophobic-icephobic coating was about 108°. The water sliding angle of the hydrophobic-icephobic coating was about 15°. The ice adhesion strength of the hydrophobic-icephobic coating was about 28 kPa. In comparison, a polyurethane coating without any hydrolyzed organosilane or silica nanoparticles has an ice adhesion strength of about 150 kPa.

The adhesion of the hydrophobic-icephobic coating had a rating of 5B as determined by ASTM D 3359. The Taber abrasion for a full coating of the hydrophobic-icephobic coating was a value of 25 mg under ASTM D 4060 with a 1 Kg load, 1000 cycles, and CS10 abrasive wheels. The hydrophobic-icephobic coating passed 500 hrs of a UV light exposure test under ASTM G 154. The change in gloss and color of the hydrophobic-icephobic coating was 2% or less of it original valves after 500 hrs of UV light exposure.

The hydrophobic-icephobic coating was exposed to different chemical solutions to determine its chemical resistance. A first chemical solution (Chemical #1) was methyl ethyl ketone. A second chemical solution (Chemical #2) was a 1:1:1 mixture of 2-butuxyethanol, di-ethanol amine and water. A third chemical solution (Chemical #3) was a mixture of ethylene glycol (20%), propylene glycol (30%), tri-ethanol amine (5%), triton X100 (1%), benzotriazole (0.1%), and water. A fourth chemical solution (Chemical #4) was a mixture of Dettol hand wash solution (5% in deionized water. The properties of the coatings are set forth in TABLE 1.

| TABLE 1 | | | | |
|---|---|---|---|---|
| | Chem #1 | Chem #2 | Chem #3 | Chem #4 |
| Exposure Time | 4 hrs | 24 hrs | 24 hrs | 24 hrs |
| Liquid Contact Angle | 108° | 98° | 104° | 106° |
| Liquid Sliding Angle | 13° | 16° | 12° | 12° |
| Adhesion | 5B | 5B | 5B | 5B |
| Taber Abrasion Value | 9 mg | 18 mg | 17 mg | 25 mg |

A liquid contact angle of 98° or more shows that the coatings are liquidphobic to the cleaning solutions. A liquid slide angle of 16° or less shows that the cleaning solutions easily slide off from the coatings. An adhesion rating of 5B after the exposure time to the cleaning solutions as listed shows that the coatings have good adhesion to the metal substrate. A Taber abrasion value of 25 mg or less after the exposure time to the cleaning solutions shows that the coatings have good abrasion resistance. The adhesion rating of 5B after the exposure time to the coatings as listed shows that the coatings have good adhesion to the metal substrate even after exposure to the cleaning solution.

While the foregoing is directed to aspects of the present disclosure, other and further aspects of the disclosure may be devised without departing from the basic scope thereof, and the scope thereof is determined by the claims that follow.

## Claims

1. A composition, comprising:
a monomer binder;
an organic solvent; and
a hydrolyzed organosilane represented by a formula of R¹-Si-(OH)₃, wherein R¹ is selected from the group consisting of an alkyl or a haloalkyl having from 3 to 40 carbons.

2. The composition of claim 1, wherein R¹ is selected from the group consisting of an alkyl or a haloalkyl having from 10 to 20 carbons.

3. The composition of claim 1 or 2, further comprising silica nanoparticles, wherein the silica nanoparticles are preferably present in amount from about 0.5 weight percent to about 5 weight percent.

4. The composition of any of claims 1-3, wherein the hydrolyzed organosilane and the monomer binder are present in a weight ratio from about 1:1 to about 1:10.

5. The composition of any of claims 1-4, wherein the hydrolyzed organosilane and the organic solvent are present in a weight ratio from about 1:2 to about 1:100.

6. A substrate comprising a coating disposed thereon, the coating comprising:
a polymer base; and
a polyorganosiloxane comprising -(R¹-Si-O₂)-units, wherein R¹ is selected from the group consisting of an alkyl or a haloalkyl having from 3 to 40 carbons and wherein one or more of -(R¹-Si-O₂)- units are chemically bonded to the substrate.

7. The substrate of claim 6, wherein the R¹ is selected from the group consisting of an alkyl or a haloalkyl having from 10 to 20 carbons.

8. The substrate of claim 6 or 7, having at least one of a water contact angle about 90°or more, a water sliding angle of about 30°or less, and/or an ice adhesion strength of about 80 kPa or less.

9. The substrate of any of claims 6-8, wherein the substrate comprising an intermediate coating disposed on a metal substrate, the one or more of -(R¹-Si-O₂)-units are chemically bonded to the intermediate coating.

10. The substrate of any of claims 6-9, further comprising silica nanoparticles.

11. The substrate of any of claims 6-10, having at least one of a water contact angle about 100°or more, a water sliding angle of about 20°or less, and/or an ice adhesion strength of about 30 kPa or less.

12. A method of forming a hydrophobic-icephobic coating over a substrate, comprising:
hydrolyzing an organosilane in an organic solvent to form a hydrolyzed organosilane mixture, wherein the organosilane is represented by a formula (R¹)-Si-(OR²)₃ wherein R¹ is selected from the group consisting of an alkyl or a haloalkyl having 3 to 40 carbons and wherein each R² is independently selected from the group consisting of an alkyl having 1 to 3 carbons;
mixing a polymer base, a hardener, and the hydrolyzed organosilane mixture to form a hydrophobic-icephobic composition;
applying the hydrophobic-icephobic composition to the substrate; and
curing the hydrophobic-icephobic composition to form the hydrophobic-icephobic coating.

13. The method of claim 12, wherein R¹ is selected from the group consisting of an alkyl or a haloalkyl having from 10 to 20 carbons.

14. The method of claim 12 or 13, further comprising mixing an alcohol solvent with the organic solvent and the organosilane to hydrolyze the organosilane.

15. The method of any of claims 12-14, wherein the hydrophobic-icephobic composition is thermally cured at a temperature from an ambient temperature to about 80°C.
